(19) Europäisches Patentamt
European Patent Office
Office européen des brevets

(11) **EP 2 345 684 B1**

(12) **EUROPEAN PATENT SPECIFICATION**

(45) Date of publication and mention
of the grant of the patent:
**26.03.2014 Bulletin 2014/13**

(51) Int Cl.:
*C08G 63/181* $^{(2006.01)}$    *C08G 63/183* $^{(2006.01)}$
*C08G 63/83* $^{(2006.01)}$    *C08G 63/85* $^{(2006.01)}$
*C08G 63/87* $^{(2006.01)}$

(21) Application number: **11151086.3**

(22) Date of filing: **17.01.2011**

(54) **Polymerization method for polyester resin, polyester resin composition, and polyester film**

Polymerisierungsverfahren für Polyesterharz, Polyesterharzzusammensetzung und Polyesterfilm

Procédé de polymérisation pour résine de polyester, composition de résine de polyester et film polyester

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2010 JP 2010008595**

(43) Date of publication of application:
**20.07.2011 Bulletin 2011/29**

(73) Proprietor: **Fujifilm Corporation
Minato-ku
Tokyo 106-0031 (JP)**

(72) Inventor: **Miyasaka, Rei
Kanagawa (JP)**

(74) Representative: **HOFFMANN EITLE
Patent- und Rechtsanwälte
Arabellastrasse 4
81925 München (DE)**

(56) References cited:
**EP-A1- 2 006 315    EP-A1- 2 083 035**

Remarks:
The file contains technical information submitted after the application was filed and not included in this specification

**Description**

BACKGROUND OF THE INVENTION

Field of the Invention

The present invention relates to a polymerization method for a polyester resin, a polyester resin composition, and a polyester film.

Description of the Related Art

In general, polyesters are produced by a condensation polymerization process using a dicarboxylic acid or a derivative thereof capable of ester formation, and a glycol. For example, polyethylene terephthalate (PET) is produced by the condensation polymerization of terephthalic acid or a derivative thereof and ethylene glycol.

Commercial production processes for PET generally utilize a polymerization catalyst, and antimony (Sb) catalysts are widely used as the polymerization catalyst. However, in a PET produced by using an antimony catalyst, the antimony catalyst is reduced during melt polymerization and is precipitated out as metallic Sb particles, which remain in the polymer, thereby causing an increase in a filtration pressure of a filter used during extrusion film formation, or film surface defects, and decreasing operation properties.

Catalysts using germanium (Ge) are known as polymerization catalysts that do not use antimony, but since germanium is rare, with its reserves being small, an increase in the cost is unavoidable.

In this regard, intensive studies are being conducted on the use of titanium compounds as the polymerization catalyst. Titanium compounds are advantageous in that the compounds are relatively inexpensive and have a higher catalytic activity than Sb compounds and Ge compounds, and addition of a small amount of a titanium compound yields high molecular weight polymers. Furthermore, the titanium compounds do not generate foreign substances such as Sb. However, when a titanium compound is used as a polymerization catalyst, undesirable side reactions are also promoted due to the high activity of the titanium compound, thereby causing problems such as yellowing, a decrease in thermal stability, and an increase of acetaldehyde. When a polymer takes on a yellow tinge, a serious problem is posed in a case in which, for example, the polymer is used in an optical film or a high resolution lith film.

As a technology related to such circumstances, there has been suggested, for example, a technology of obtaining a polyester resin excellent in color tone, transparency, thermal stability and electrostatic applicability, by specifying the range of the addition amounts or the ratio of the addition amounts of a titanium compound and a phosphorus compound or a magnesium compound (see, for example, Japanese Patent Application Laid-Open (JP-A) No. 2004-124067, JP-A No. 2004-197075, JP-A No. 2006-77148, JP-A No. 2005-089516 and JP-A No. 2004-168888).

Furthermore, it has also been suggested to use a reaction product of a titanium compound and a phosphorus compound as a polymerization catalyst (see, for example, JP-A No. 7-138354, JP-A No. 2000-239369, JP-A No. 2004-269772 and JP-A No. 2000-169683), and to use a titanium-silicon composite oxide (see, for example, JP-A No. 2004-359770) or a titanium-magnesium-phosphorus three-component composite reaction product as a catalyst (see, for example, JP-A No. 2004-224858).

It has also been suggested to define the order of addition of the titanium compound and the phosphorus compound or the magnesium compound in order to achieve a satisfactory color tone and a low acetaldehyde content (see, for example, Japanese Patent No. 3717392 and JP-A No. 2005-023312). Specifically, it has been disclosed that a phosphorus compound, subsequently a magnesium compound, and subsequently a titanium compound are added in this order after the completion of an esterification reaction but before the transition to a condensation polymerization reaction, or that a phosphorus compound is added to the raw material slurry or during the early stage of the esterification reaction, and then a titanium compound is added during the early stage of the condensation polymerization. Further, it has been suggested to add a phosphorus compound after the addition of a polymerization catalyst and the initiation of depressurization in a polymerization reaction tank but before the achievement of an intended polymerization degree of a polyester, thereby suppressing the generation of foreign matter due to thermal degradation during polymerization, and providing a polyester excellent in heat stability and color tone (see, for example, JP-A No. 2008-201838).

In addition to these, there is available a document which describes that when a titanium catalyst is present in an esterification reaction, fine particles originating from the titanium catalyst are generated, and cloudiness may occur in the polyester resin thus obtained (see, for example, JP-A No. 2008-308641).

However, in the above conventional technologies, heat resistance and color tone at or exceeding a certain level cannot be obtained simply through a combination of the amounts of the titanium compound and the phosphorus compound or magnesium compound to be added. Furthermore, the method of using a reaction product of a titanium compound and a phosphorus compound or a titanium-phosphorus-magnesium three-component composite reaction product as a catalyst, is intended to improve the heat resistance and color tone of the polymer by carrying out polymerization in a state where the high activity of the titanium catalyst has been preliminarily suppressed by the phosphorus compound or the like. Indeed, although some improvement effects on the color tone and heat resistance of the polymer thus obtained can be expected, the improvement effects are still insufficient, and a good balance between the color tone, heat resistance and polymerization activity has not been achieved.

In the above-described technology (for example, Japanese Patent No. 3717392) in which the order of addition of the titanium compound, phosphorus compound and magnesium compound is defined, a polyester is polymerized according to this order of addition. The reaction activity during melt polymerization and the color tone of the polyester resin thus obtained are satisfactory, but problems have been revealed in that coloration due to heating is serious, that is, heat resistance is markedly low, and that when the polyester resin is heated and melt extruded during the process of film forming, coloration of the polyester resin is conspicuous.

As one of the causes for such phenomena, it can be speculated that since the reaction activity is high and thus a predetermined viscosity is reached within a short time during melt polymerization, the effect of coloration by side reactions is small; however, since polymerization is completed while the titanium activity is not sufficiently suppressed, coloration occurs during subsequent melt extrusion. As such, in order to use a titanium compound for polyester resins, there is a need to provide measures that are capable of reducing coloration during polymerization by suppressing side reactions without impairing the polymerization reaction activity, and also of providing high resistance to coloration occurring during the molding process after polymerization.

JP-A No. 2004-168888 aims at obtaining a polyester resin excellent in both color tone and thermal stability by defining the addition amounts of a titanium compound and a phosphorus compound or a magnesium compound, but as a result of studying this technology, it has been found that the obtained polyester has low electrostatic applicability and is problematic in castability during film formation. As one of the causes for this phenomenon, it can be speculated that the phosphorus compound is added to deactivate the magnesium compound, which is a transesterification catalyst, and the titanium compound, which is a condensation polymerization catalyst, is added, but the magnesium compound having an effect of imparting electrostatic applicability is reacted with the phosphorus compound, so that the effect is impaired. Further, when a phosphorus compound is added after the addition of a polymerization catalyst and the initiation of depressurization in a polymerization reaction tank but before the achievement of an intended polymerization degree of a polyester to carry out polymerization reaction for obtaining a polyester in accordance with the method of JP-A No. 2008-201838, it has been found that there is a problem in that the amount of the phosphorus compound contained in the polyester is smaller than the initial addition amount thereof, and as a result, the color tone and the heat stability are insufficient. As one of the causes for this phenomenon, it can be speculated that since the phosphorus compound is added under reduced pressure, a part of the phosphorus compound is volatilized. Further, it has been found that there is a problem in that a foreign matter is generated from the phosphorus compound due to the timing of adding the phosphorus compound and the type and the addition amount thereof.

On the other hand, in the case of forming a film by extruding a polyester resin with an extruder, as the production amount is increased, the shear heat generation in the extruder is also increased, so that the heat may bring about heating to a temperature of 300°C or higher. Under such a high temperature, the resin is susceptible to coloration, and the polyester resin itself takes on a yellow tinge. Therefore, even if the color tone is satisfactorily transparent at the point in time of polymerization, the resin may be subjected to the influence of thermal history during the subsequent extrusion and may undergo noticeable coloration.

On the other hand, when it is attempted to increase the production amount (that is, line speed) during the film forming process, higher castability (electrostatic applicability) is required. Accordingly, in general, there is available a technology of adding an alkali metal, an alkaline earth metal or the like, such as Na, Mg, Ca or Zn, for imparting electrostatic applicability. However, since the presence of these metals accelerates a decomposition reaction and causes coloration, the addition of such a metal is basically undesirable from the viewpoint of the condensation polymerization reaction.

## SUMMARY OF THE INVENTION

According to an aspect of the invention, there is provided a polymerization method for a polyester resin, the method comprising:

an esterification reaction step which includes at least polymerizing an aromatic dicarboxylic acid and an aliphatic diol in the presence of a catalyst containing a titanium compound including an organic chelated titanium complex having an organic acid as a ligand, and adding the organic chelated titanium complex, a magnesium compound, and a pentavalent phosphoric acid ester which does not have an aromatic ring as a substituent, in this order; and a condensation polymerization step of subjecting an esterification reaction product produced by the esterification reaction step to a condensation polymerization reaction.

DETAILED DESCRIPTION OF THE INVENTION

In a reaction system using Ti, which is not Sb or Ge, as a polymerization catalyst, when a titanium compound is used together with a phosphorus compound and a magnesium compound as additives to produce a resin through an esterification reaction, the properties of the polyester resin obtained by using the titanium catalyst are largely affected by the balance between the catalyst and the additives and by the order of addition. Based on this point, the inventor has obtained a finding that when the order of addition of the phosphorus compound is arranged to be after the addition of the titanium compound and the magnesium compound, and the balance between the three elements of Ti, P and Mg is appropriately regulated, good balance between color tone and heat resistance is achieved and further high electrostatic applicability is imparted while the polymerization reactivity is retained. Thus, the invention has been completed based on such a finding.

In the present invention, in a production process of performing polymerization by the order of addition that has been considered to result in insufficient performance in Japanese Patent No. 3717392 (Comparative Example 5), that is, in a production process of performing polymerization by adding a titanium compound prior to a phosphorus compound, by selecting an optimal phosphorus compound and by selecting an optimal amount of addition, the resulting resin has a stability that is capable of maintaining a good color tone, which is equivalent or better compared with conventional resins, and excellent heat resistance can be exhibited.

JP-A No. 2008-201838 describes that the titanium compound is preferably not added in the esterification step, and that the heat stability is insufficient when the amount of the phosphorus compound contained in the polyester is less than 70 ppm. In this regard, it has been found that in the present invention, even when the titanium compound is added in the esterification step and the amount of the phosphorus compound contained in the polyester is less than 70 ppm, a polyester resin excellent in color tone and heat stability can be obtained.

Hereinafter, the method for producing a polyester resin of the invention will be described in detail, and the polyester resin composition and polyester film obtained from this production method will also be described in detail.

The method for producing a polyester resin comprises:

an esterification reaction step which includes at least polymerizing an aromatic dicarboxylic acid and an aliphatic diol in the presence of a catalyst containing a titanium compound including an organic chelated titanium complex having an organic acid as a ligand, and adding the organic chelated titanium complex, a magnesium compound, and a pentavalent phosphoric acid ester which does not have an aromatic ring as a substituent, in this order; and a condensation polymerization step of subjecting an esterification reaction product produced by the esterification reaction step to a condensation polymerization reaction to produce a condensation polymerization product.

In the method of the invention, since an order of addition of adding an organic chelated titanium complex as a titanium compound, adding a magnesium compound, and then adding a specific pentavalent phosphorus compound is employed in the process of the esterification reaction, the reaction activity of the titanium catalyst can be maintained to be appropriately high, the electrostatic applicability can be imparted by magnesium, and the decomposition reaction in the condensation polymerization can be effectively suppressed. Therefore, as a result, a polyester resin is obtained which has less coloration and high electrostatic applicability, and exhibits an improvement in yellowing during exposure to high temperature.

Thereby, a polyester resin can be provided which undergoes less coloration during polymerization and during the subsequent melt film forming, so that the yellow tinge is reduced as compared with the conventional polyester resins obtained by antimony (Sb) catalyst systems, which has a color tone and transparency that are comparable to those of the relatively highly transparent polyester resins obtained by germanium catalyst systems, and which has excellent heat resistance. Furthermore, a polyester resin having high transparency and a reduced yellow tinge can be obtained without using a color adjusting material such as a cobalt compound or a colorant.

This polyester resin can be used for applications where the demand for transparency is high (for example, optical films and industrial lith films), and since there is no need to use expensive germanium-based catalysts, a significant reduction in cost can be made. In addition, because the incorporation of catalyst-induced foreign matter that is easily generated in Sb catalyst systems can also be avoided, the occurrence of failure during the film foaming process and quality defects are also reduced, so that cost reduction as a result of yield improvement can be made.

- Esterification reaction step -

The esterification reaction step according to the invention involves reacting an aromatic dicarboxylic acid and an aliphatic diol in the presence of a catalyst containing a titanium compound. This esterification reaction step includes using an organic chelated titanium complex having an organic acid as a ligand, as a titanium compound which serves as a catalyst, and adding the organic chelated titanium complex, a magnesium compound, and a pentavalent phosphoric acid ester which does not have an aromatic ring as a substituent in this order during the step.

In the present invention, a period until the condensation polymerization reaction is initiated is included in the esterification step. For example, a period in piping from an esterification reaction tank to a condensation polymerization reaction tank is included in the esterification step.

In the present invention, when the organic chelated titanium complex, the magnesium compound, and the pentavalent phosphoric acid ester are added in this order, it is not always necessary to add all of these components in this order. The addition amount of each of the organic chelated titanium complex, the magnesium compound, and the pentavalent phosphoric acid ester, added in this order, is preferably at least 70% by mass (more preferably at least 80% by mass) of the total addition amount thereof.

First, an aromatic dicarboxylic acid and an aliphatic diol are mixed with a catalyst containing an organic chelated titanium complex, which is a titanium compound, prior to the addition of a magnesium compound and a phosphorus compound. Since a titanium compound such as an organic chelated titanium complex has a high catalytic activity even in esterification reactions, the esterification reaction can be carried out satisfactorily. In this case, the titanium compound may be added to a mixture of a dicarboxylic acid component and a diol component, or a dicarboxylic acid component (or a diol component) and a titanium compound may be mixed, and then a diol component (or a dicarboxylic acid component) may be incorporated into the mixture. Furthermore, the dicarboxylic acid component, the diol component and the titanium compound may be simultaneously mixed. There are no particular limitations on the method of mixing, and any conventionally known method can be used to perform mixing.

(Dicarboxylic acid component)

As the dicarboxylic acid component, a least one aromatic dicarboxylic acid is used. Preferably, the dicarboxylic acid component contains an aromatic dicarboxylic acid as a main component. Here, the term "main component" means that the proportion of the aromatic dicarboxylic acid in the dicarboxylic acid component is 80% by mass or greater.

Examples of the aromatic dicarboxylic acid include terephthalic acid, isophthalic acid, phthalic acid, 1,4-naphthalenedicarboxylic acid, 1,5-naphthalenedicarboxylic acid, 2,6-naphthalonedicarboxylic acid, 1,8-naphthalenedicarboxylic acid, 4,4'-diphenyldicarboxylic acid, 4,4'-diphenyl ether dicarboxylic acid, 5-sodium sulfoisophthalic acid, phenylindane dicarboxylic acid, anthracene dicarboxylic acid, phenanthrene dicarboxylic acid, and 9,9'-bis(4-carboxyphenyl)fluorenic acid.

A dicarboxylic acid component other than the aromatic dicarboxylic acid may also be included. Examples of such a dicarboxylic acid component include ester derivatives of aromatic dicarboxylic acids and the like.

(Diol component)

As the diol component, at least one aliphatic diol is used. The aliphatic diol may include ethylene glycol, and preferably contains ethylene glycol as a main component. Here, the term main component means that the proportion of ethylene glycol in the diol component is 80% by mass or greater.

The aliphatic diol may include a diol component other than ethylene glycol. Examples of the diol component other than ethylene glycol include aliphatic diols such as 1,2-propanediol, 1,3-propanediol, 1,4-butanediol, 1,2-butanediol, and 1,3-butanediol; alicyclic diols such as cyclohexanedimethanol, spiroglycol and isosorbide; and aromatic diols such as bisphenol A, 1,3-benzenedimethanol, 1,4-benzenedimethanol, and 9,9'-bis(4-hydroxyphenyl)fluorene.

The amount of the aliphatic diol (for example, ethylene glycol) used is preferably in the range of 1.015 moles to 1.50 moles based on 1 mole of the aromatic dicarboxylic acid (for example, terephthalic acid) and an optional ester derivative thereof. The amount used is more preferably in the range of 1.02 moles to 1.30 moles, and even more preferably in the range of 1.025 moles to 1.10 moles. When the amount used is in the range of 1.015 moles or greater, the esterification reaction proceeds satisfactorily, and when the amount used is in the range of 1.50 moles or less, for example, side production of diethylene glycol due to the dimerization of ethylene glycol is suppressed, and many properties such as melting point, glass transition temperature, crystallinity, heat resistance, hydrolysis resistance and weather resistance can be maintained to be adequate.

The aromatic dicarboxylic acid and the aliphatic diol can be introduced by preparing a slurry containing these compounds, and supplying this slurry continuously to the esterification reaction step.

For carrying out the esterification reaction, a process of adding an organic chelated titanium complex, which is a titanium compound, and a magnesium compound and a pentavalent phosphorus compound as additives, in this order, is provided. At this time, the esterification reaction proceeds in the presence of the organic chelated titanium complex, and then the magnesium compound is added before the addition of the phosphorus compound.

(Titanium compound)

As the titanium compound which serves as a catalyst component, at least one organic chelated titanium complex which has an organic acid as a ligand is used. Examples of the organic acid include citric acid, lactic acid, trimellitic acid, and malic acid. Among them, an organic chelate complex having citric acid or a citric acid salt as a ligand is preferred.

In a case in which a chelated titanium complex having, for example, citric acid as a ligand is used, the amount of foreign matter generated, such as fine particles, is small, and since the chelated titanium complex has high heat stability as compared with other titanium compounds, only a very small portion of the catalyst is decomposed during polymerization reaction, and the decrease in reactivity caused by the decomposition of the catalyst and the deterioration in color tone caused by a side reaction are suppressed, so that a polyester resin having satisfactory polymerization activity and color tone is obtained. Furthermore, in a case in which a citric acid chelated titanium complex is used, when the titanium complex is added during the esterification reaction stage, a polyester resin which has satisfactory polymerization activity and color tone and fewer terminal carboxyl groups is obtained, as compared with the case of adding the titanium complex after the esterification reaction. In this regard, it is speculated that since the titanium catalyst has a catalytic effect on esterification reactions as well, when the titanium catalyst is added during the esterification step, the acid value of the oligomer is lowered at the time of completion of the esterification reaction, and the subsequent condensation polymerization reaction is carried out more efficiently, and that a complex having citric acid as a ligand has higher resistance to hydrolysis as compared with titanium alkoxide or the like, does not undergo hydrolysis during the esterification reaction process, and effectively functions as a catalyst for the esterification and condensation polymerization reactions while maintaining the original activity.

Furthermore, it is generally known that when the amount of terminal carboxyl groups is increased, hydrolysis resistance is deteriorated. Thus, since the amount of terminal carboxyl groups is decreased according to the addition method of the invention, an enhancement of hydrolysis resistance is anticipated.

The citric acid chelated titanium complex is easily available as commercial products such as, for example, VERTEC AC-420 (trade name, manufactured by Johnson Matthey Plc.)

In a preferable embodiment of the esterification reaction, the polymerization reaction is carried out using a Ti catalyst in an amount that corresponds to a content of Ti element of from 1 ppm to 30 ppm, more preferably from 3 ppm to 20 ppm, and even more preferably from 5 ppm to 15 ppm. When the content of titanium element is 1 ppm or greater, it is advantageous since the speed of polymerization is increased, and when the amount is 30 ppm or less, it is advantageous in that a satisfactory color tone is obtained.

Examples of the titanium compound other than the organic chelated titanium complex generally include an oxide, a hydroxide, an alkoxide, a carboxylate, a carbonate, an oxalate and a halide. So long as the effects of the invention are not impaired, another titanium compound may be used together with the organic chelated titanium complex. Examples of such a titanium compound include titanium alkoxides such as tetra-n-propyl titanate, tetra-i-propyl titanate, tetra-n-butyl titanate, tetra-n-butyl titanate tetramer, tetra-t-butyl titanate, tetracyclohexyl titanate, tetraphenyl titanate, and tetrabenzyl titanate; titanium oxides obtained by hydrolysis of titanium alkoxides; titanium-silicon or zirconium composite oxides obtained by hydrolysis of mixtures of titanium alkoxide and silicon alkoxide or zirconium alkoxide; titanium acetate, titanium oxalate, potassium titanium oxalate, sodium titanium oxalate, potassium titanate, sodium titanate, titanic acid-aluminum hydroxide mixture, titanium chloride, titanium chloride-aluminum chloride mixture, and titanium acetylacetonate.

In the synthesis of a polyester using such a titanium compound, for example, the methods described in Japanese Examined Patent Application (JP-B) No. 8-30119, Japanese Patent Nos. 2543624, 3335683, 3717380, 3897756, 3962226, 3979866, 3996871, 4000867, 4053837, 4127119, 4134710, 41.59154, 4269704, 4313538 and the like can be applied.

(Phosphorus compound)

As the pentavalent phosphorus compound, at least one pentavalent phosphoric acid ester which does not have an aromatic ring as a substituent is used. Examples of the pentavalent phosphoric acid ester according to the invention include trimethyl phosphate, triethyl phosphate, tri-n-butyl phosphate, trioctyl phosphate, tris(triethylene glycol) phosphate, methyl acid phosphate, ethyl acid phosphate, isopropyl acid phosphate, butyl acid phosphate, monobutyl phosphate, dibutyl phosphate, dioctyl phosphate, and triethylene glycol acid phosphate.

According to the study results obtained by the present inventor, among the pentavalent phosphoric acid esters described above, a phosphoric acid ester having a lower alkyl group having 2 or fewer carbon atoms as a substituent [$(OR)_3$-P=O; R = alkyl group having 1 or 2 carbon atoms] is preferable, and specifically, trimethyl phosphate and triethyl phosphate are particularly preferable.

Particularly, in the case of using, as a catalyst, a chelated titanium complex having citric acid or a salt thereof as a ligand, a pentavalent phosphoric acid ester leads to a satisfactory polymerization activity and color tone as compared with a trivalent phosphoric acid ester, and in a case in which a pentavalent phosphoric acid ester having 2 or fewer carbon atoms is added, the balance between polymerization activity, color tone and heat resistance can be particularly improved.

The addition amount of the phosphorus compound is preferably an amount that corresponds to a content of P element of from 50 ppm to 90 ppm. The addition amount of the phosphorus compound is more preferably an amount that corresponds to a content of P element of from 60 ppm to 80 ppm, and even more preferably from 65 ppm to 75 ppm.

(Magnesium compound)

When a magnesium compound is included, electrostatic applicability is enhanced. In this case, coloration is likely to occur; however, according to the invention, coloration is suppressed, and thus excellent color tone and heat resistance can be obtained.

Examples of the magnesium compound include magnesium salts such as magnesium oxide, magnesium hydroxide, magnesium alkoxide, magnesium acetate, and magnesium carbonate. Among them, from the viewpoints of solubility in ethylene glycol, magnesium acetate is most preferable.

In order to impart high electrostatic applicability, the addition amount of the magnesium compound is an amount that corresponds to a content of Mg element of 50 ppm or greater, and more preferably from 50 ppm to 100 ppm. The addition amount of the magnesium compound is, from the viewpoints of imparting electrostatic applicability, preferably an amount that corresponds to a content of Mg element of from 60 ppm to 90 ppm, and even more preferably from 70 ppm to 80 ppm.

In the esterification reaction step according to the invention, it is particularly preferable to add the titanium compound as the catalyst component and the magnesium compound and phosphorus compound as the additives such that the value Z calculated from the following formula (i) satisfies the following formula (ii) to carry out melt polymerization. Here, the P content is the amount of phosphorus originating from the entirety of phosphorus compounds including the pentavalent phosphoric acid ester which does not have an aromatic ring, and the Ti content is the amount of titanium originating from the entirety of Ti compounds including the organic chelated titanium complex. As such, when a combination of a magnesium compound and a phosphorus compound is selected and used in a catalyst system containing a titanium compound, and the timing of addition and the proportion of addition are controlled, a color tone with less yellow tinge is obtained while the catalytic activity of the titanium compound is maintained to be appropriately high. Thus, a heat resistance can be imparted that does not easily cause yellowing even if the polyester resin is exposed to high temperature during the polymerization reaction or during the subsequent film forming process (during melting).

(i) $Z = 5 \times (P \text{ content [ppm]/atomic weight of P}) - 2 \times (Mg \text{ content [ppm]/atomic weight of Mg}) - 4 \times (Ti \text{ content [ppm]/atomic weight of Ti})$

(ii) $0 \leq Z \leq +5.0$

Since the phosphorus compound interacts with the titanium compound as well as the magnesium compound, this value is an index that quantitatively expresses the balance between the three components.

The formula (i) expresses the amount of phosphorus capable of acting on titanium, by subtracting the portion of phosphorus that acts on magnesium, from the total amount of phosphorus capable of reacting. In a case in which the value Z is positive, the system is in a state in which the phosphorus that inhibits titanium is in excess. In a case in which the value is negative, the system is in a state in which phosphorus that is required to inhibit titanium is insufficient. In regard to the reaction, since the respective atoms of Ti, Mg and P are not of equal valence, each of the mole numbers (numbers of atoms (ppm/atomic weight)) in the formula is weighted by multiplying by the valence.

In the invention, a polyester resin excellent in color tone and resistance to heat coloration can be obtained, while having a reaction activity necessary for the reaction, by using a titanium compound, a phosphorus compound and a magnesium compound that do not require special synthesis or the like and are easily available at low cost.

In the formula (ii), from the viewpoints of further enhancing the color tone and the resistance to heat coloration while maintaining the polymerization reactivity, it is preferable that $+1.5 \leq Z \leq +5.0$ is satisfied, it is more preferable that $+1.5 \leq Z \leq +4.0$ is satisfied, and it is even more preferable that $+1.5 \leq Z \leq +3.0$ is satisfied.

In a preferable embodiment according to the invention, a chelated titanium complex having citric acid or a citric acid salt as a ligand is added in an amount of Ti element of from 1 ppm to 30 ppm to the aromatic dicarboxylic acid and the aliphatic diol before the esterification reaction is completed, and then in the presence of the chelated titanium complex, a magnesium salt of weak acid is added in an amount of Mg element of from 60 ppm to 90 ppm (more preferably, from 70 ppm to 80 ppm.), and after the addition, a pentavalent phosphoric acid ester which does not have an aromatic ring as a substituent is further added in an amount of P element of from 60 ppm to 80 ppm (more preferably, from 65 ppm to 75 ppm).

The esterification reaction can be carried out under the conditions in which ethylene glycol is refluxed, while removing the water or alcohol generated by the reaction from the system.

The esterification reaction may be carried out in a single step, or may be carried out by division into multiple stages.

In a case in which the esterification reaction is carried out in a single step, the esterification reaction temperature is preferably 230°C to 260°C, and more preferably 240°C to 250°C.

In a case in which the esterification reaction is carried out by division into multiple stages, the temperature of the esterification reaction at the first reaction tank is preferably 230°C to 260°C, and more preferably 240°C to 250°C, and the pressure is preferably 1.0 kg/cm$^2$ to 5.0 kg/cm$^2$, and more preferably 2.0 kg/cm$^2$ to 3.0 kg/cm$^2$. The temperature of the esterification reaction at the second reaction tank is preferably 230°C to 260°C, and more preferably 245°C to 255°C, and the pressure is preferably 0.5 kg/cm$^2$ to 5.0 kg/cm$^2$ and more preferably 1.0 kg/cm$^2$ to 3.0 kg/cm$^2$. Furthermore, in a case in which the esterification reaction is carried out by division into three or more stages, the conditions for the esterification reaction in the middle stages are preferably established to be intermediate between the conditions at the first reaction tank and the conditions at the final reaction tank.

- Condensation polymerization step -

The condensation polymerization step according to the invention produces a condensation polymerization product by subjecting the esterification reaction product produced in the esterification reaction step to a condensation polymerization reaction.

The condensation polymerization reaction may be carried out in a single stage, or may be carried out by division into multiple stages.

The esterification reaction product such as oligomers produced in the esterification reaction is continuously subjected to a condensation polymerization reaction. This condensation polymerization reaction can be preferably carried out by supplying the esterification reaction product to condensation polymerization reaction tanks of multiple stages.

When the condensation polymerization reaction is conducted in a single step, the condensation polymerization temperature is preferably from 260°C to 300°C, and more preferably from 275°C to 285°C. The pressure is preferably from 10 to 0.1 torr (from $1.33 \times 10^{-3}$ to $1.33 \times 10^{-5}$ MPa), and more preferably from 5 to 0.1 torr (from $6.67 \times 10^{-4}$ to $6.67 \times 10^{-5}$ MPa).

For example, the condensation polymerization reaction conditions, in the case of performing the reaction in a three-stage reaction tank, are that the reaction temperature at the first reaction tank is preferably 255°C to 280°C, and more preferably 265°C to 275°C, and the pressure is preferably 100 torr to 10 torr ($13.3 \times 10^{-3}$ MPa to $1.3 x 10^{-3}$ MPa), and more preferably 50 torr to 20 torr ($6.67 \times 10^{-3}$ MPa to $2.67 \times 10^{-3}$ MPa). The reaction temperature at the second reaction tank is preferably 265°C to 285°C, and more preferably 270°C to 280°C, and the pressure is preferably 20 torr to 1 torr ($2.67 \times 10^{-3}$ MPa to $1.33 \times 10^{-4}$ MPa), and more preferably 10 torr to 3 torr ($1.33 \times 10^{-3}$ MPa to $4.0 \times 10^{-4}$ MPa). In the third and final reaction tank, the reaction temperature is preferably 270°C to 290°C, and more preferably 275°C to 285°C, and the pressure is preferably 10 torr to 0.1 torr ($1.33 \times 10^{-3}$ MPa to $1.33 \times 10^{-5}$ MPa), and more preferably 5 torr to 0.1 torr ($6.67 \times 10^{-4}$ MPa to $33 \times 10^{-5}$ MPa).

In the invention, since the esterification reaction step and condensation polymerization step as described above are provided, a polyester resin composition containing titanium atoms (Ti), magnesium atoms (Mg) and phosphorus atoms (P), in which the value Z calculated from the following formula (i) satisfies the following formula (ii), can be produced.

$$\text{(i) } Z = 5 \times (\text{P content [ppm]/atomic weight of P}) - 2 \times (\text{Mg content [ppm]/atomic weight of Mg}) - 4 \times (\text{Ti content [ppm]/atomic weight of Ti})$$

$$\text{(ii) } 0 \leq Z \leq +5.0$$

Since the polyester resin composition of the invention satisfies $0 \leq Z \leq +5.0$, the balance between the three elements of Ti, P and Mg is appropriately regulated, and therefore, the polyester resin has an excellent color tone and heat resistance (reduction of yellowing under high temperature) and can maintain high electrostatic applicability, while maintaining the polymerization reactivity. Furthermore, according to the invention, a polyester resin having high transparency and reduced yellow tinge can be obtained without using a color adjusting material such as a cobalt compound or a colorant.

The formula (i) quantitatively expresses the balance between the three components of the titanium compound, magnesium compound and phosphorus compound, and represents the amount of phosphorus capable of acting on titanium, by subtracting the portion of phosphorus that acts on magnesium from the total amount of phosphorus capable of reaction. If the value Z is less than 0, that is, if the amount of phosphorus that acts on titanium is too small, the catalytic activity (polymerization reactivity) of titanium is increased. However, heat resistance is decreased, and the polyester resin thus obtained takes on a yellow tinge. Thus, the polyester resin is colored after polymerization, for example, during film forming (during melting), and the color tone is deteriorated. Furthermore, if the value Z exceeds +5.0, that is, if the amount of phosphorus that acts on titanium is too large, the heat resistance and color tone of the polyester resin thus obtained are satisfactory, but the catalytic activity is excessively decreased, and producibility is deteriorated, and further the retention time in the system is increased, and thus the effect of the decomposition reaction is increased, so that the color tone is deteriorated and the terminal carboxyl groups are increased.

In the invention, due to the same reasons as described above, the formula (ii) preferably satisfies $+1.5 \leq Z \leq +5.0$, more preferably satisfies $+1.5 \leq Z \leq +4.0$, and even more preferably satisfies $+1.5 \leq Z \leq +3.0$.

The measurement of the respective elements of Ti, Mg and P can be carried out by quantifying the respective elements in the polyester (PET) by using a high resolution type high frequency inductively coupled plasma mass spectrometer (HR-ICP-MS; trade name, AttoM, manufactured by SII Nanotechnology, Inc.), and calculating the contents [ppm] from the results thus obtained.

Furthermore, it is preferable that the polyester resin composition of the invention further satisfies the following formula

$$\text{b value when fabricated into pellets after condensation polymerization} \leq 4.0$$

$$\text{(iii)}$$

(iii).

b value when fabricated into pellets after condensation polymerization $\leq 4.0$

(iii)

If the b value of the pellets is 4.0 or less when the polyester resin obtained by condensation polymerization is pelletized, the polyester resin has a reduced yellow tinge and excellent transparency. When the b value is 3.0 or less, the polyester resin has a color tone comparable to that of polyester resins polymerized in the presence of Ge catalysts.

The b value serves as an index representing the color tinge, and is a value measured by using an SM color meter (manufactured by Suga Test Instruments Co., Ltd.).

It is also preferable that the polyester resin composition of the invention satisfies the following formula (iv).

$$\text{Rate of color tone change } [\Delta b/\text{minute}] \leq 0.15 \qquad \text{(iv)}$$

If the rate of color tone change $[\Delta b/\text{minute}]$ is 0.15 or less when the pellets of the polyester resin obtained by condensation polymerization are retained in a molten state at 300°C, the yellowing when the polyester resin is exposed to heat can be suppressed. Thereby, in the case of, for example, forming a film by extruding with an extruder, a film having less yellowing and an excellent color tone can be obtained.

The rate of color tone change is preferably a smaller value, and a value of 0.10 or less is particularly preferable.

The rate of color tone change serves as an index representing a change in color due to heat, and is a value determined by the method described below.

That is, pellets of the polyester resin composition of the invention are fed into a hopper of an injection molding machine (for example, EC100NII, trade name, manufactured by Toshiba Machine Co., Ltd.), and while the polyester resin is retained in a molten state inside the cylinder (300°C) and the retention time is changed, the polyester resin is molded into a plate form. The b value of the plate at this time is measured using an SM color meter (manufactured by Suga Test Instruments Co., Ltd.). The rate of change $[\Delta b/\text{minute}]$ is calculated based on the changes in the b value.

The polyester resin composition of the invention is preferably such that the amount of terminal carboxyl groups (amount of terminal COOH groups; AV) is 25 eq/t (ton) or less. When the amount of terminal COOH groups is 25 eq/t or less, the hydrolysis reaction caused by $H^+$ of the terminal COOH groups of the polyester molecules can be reduced, and therefore, the hydrolysis resistance of the polyester film is enhanced. The amount of the terminal COOH groups is preferably in the range of 5 eq/t to 25 eq/t. Furthermore, the lower limit of the amount of terminal COOH groups is preferably 5 eq/t, from the viewpoints that the amount of the carboxyl groups (COOH groups) should not be too small.

The amount of the terminal carboxyl groups is determined by adding a phenol red indicator dropwise to a mixed solution prepared by dissolving 0.1 g of pellets of the polyester resin composition in 10 ml of benzyl alcohol and then adding chloroform, titrating this mixed solution with a standard solution (0.01 N KOH-benzyl alcohol mixed solution), and then calculating the terminal carboxyl groups from the amount added dropwise.

The IV (intrinsic viscosity) of the polyester resin composition obtained by the melt polymerization process may be appropriately selected according to the purpose, but is preferably in the range of from 0.50 to 0.90, more preferably from 0.55 to 0.75, and even more preferably from 0.60 to 0.70. When the IV is 0.50 or greater, cohesive failure at the interface of adhesion with an object to be adhered does not easily occur, and satisfactory adhesion is likely to be obtained. Furthermore, when the IV is 0.90 or less, the melt viscosity during film forming is satisfactory, and thermal decomposition of the polyester due to shear heat generation is suppressed, so that the acid value (AV value) can be suppressed at a low value.

In addition, the IV is a value obtained by extrapolating, at the concentration value of zero, the value obtained by dividing the specific viscosity ($\eta_{sp} = \eta_r - 1$), which is equal to the ratio of the solution viscosity ($\eta$) to the solvent viscosity ($\eta_0$), $\eta r$ (= $\eta/\eta_0$; relative viscosity) minus 1, by the concentration. The IV is determined from the solution viscosity at 30°C in a mixed solvent of 1,1,2,2-tetrachlorethane/phenol (= 2/3 [mass ratio]).

- Solid state polymerization -

After the condensation polymerization step is completed, the polyester resin thus obtained is fabricated into a pellet form or the like, and solid state polymerization may be carried out using this.

Solid state polymerization may be carried out by a continuous method (a method of packing the resin in a reactor, slowly flowing this resin for a predetermined time while heating the resin, and then sequentially discharging the resin), or may be carried out by a batch method (a method of feeding the resin into a vessel and heating the resin for a predetermined time). Specifically, the methods of solid state polymerization described in Japanese Patent Nos. 2621563, 3121876, 3136774, 3603585, 3616522, 3617340, 3680523, 3717392 and 4167159 can be used.

The temperature for solid state polymerization is preferably from 170°C to 240°C, more preferably from 180°C to 230°C, and even more preferably from 190°C to 220°C. When the temperature is in the range described above, it is preferable for achieving hydrolysis resistance. Furthermore, the time for solid state polymerization is preferably from 5 hours to 100 hours, more preferably from 10 hours to 75 hours, and even more preferably from 15 hours to 50 hours. When the time is within the range mentioned above, it is preferable for achieving hydrolysis resistance. It is preferable to perform solid polymerization in a vacuum or in a nitrogen atmosphere.

The IV of the polyester resin composition after solid state polymerization is preferably from 0.65 to 0.90, and more preferably from 0.70 to 0.85.

- Molding -

After the condensation polymerization step or solid state polymerization step is completed, a polyester film can be obtained by molding the polyester resin composition of the invention thus obtained into a film form or a sheet form. In the case of molding the polyester resin composition into a film form or a sheet form, the polyester resin can be molded by melt kneading the polyester resin using, for example, a melt extruder such as a single-screw kneading extruder equipped with a screw inside the cylinder, and extruding the polyester resin through a die. At this time, the molding temperature is preferably in the range of from 250°C to 300°C, and more preferably in the range of from 260°C to 290°C. In this case, when the polyester resin is subjected to melt film forming using, for example, an extruder or the like, shear heat generation occurs inside the extruder, and the temperature may exceed 300°C, causing coloration during the extrusion process after polymerization. However, in the invention, coloration is suppressed at a low value even in the case of extruding at such a high temperature. That is, coloration in the polymerization step is suppressed, and also the resistance to coloration (heat resistance) in the film forming process after polymerization is also excellent.

The thickness of the polyester film of the invention that is formed by molding into a film form or the like, is preferably in the range of from 50 $\mu$m to 450 $\mu$m, and more preferably from 150 $\mu$m to 300 $\mu$m.

(Additives)

The polyester resin composition according to the invention can further contain additives such as a light stabilizer and an oxidation inhibitor.

In the polyester resin composition of the invention, a light stabilizer and the like may be added after the polymerization step according to the use or purpose. When the polyester resin composition contains a light stabilizer, deterioration due to ultraviolet radiation can be prevented. Examples of the light stabilizer include a compound that absorbs light rays such as ultraviolet rays and converts the rays to thermal energy, and a material that captures the radicals generated when the resin absorbs light and decomposes, and thereby suppresses a decomposition chain reaction.

The light stabilizer is preferably a compound that absorbs light rays such as ultraviolet rays and converts the rays to thermal energy. When the polyester resin composition contains such a light stabilizer, even if ultraviolet rays are continuously radiated over a long period, the effect of enhancing the partial discharge voltage can be maintained at a high value for a long time, or change of color tone, deterioration of strength and the like in the resin due to ultraviolet radiation are prevented.

For example, the ultraviolet absorbent is such that so long as other properties of the polyester are not impaired, an organic ultraviolet absorbent, an inorganic ultraviolet absorbent and a combination of these can be preferably used without any particular limitation. On the other hand, the ultraviolet absorbent is preferably a compound that has excellent resistance to moisture and heat and can be uniformly dispersed in the resin.

Examples of the ultraviolet absorbent include, as organic ultraviolet absorbents, salicylic acid-based, benzophenone-based, benzotriazole-based and cyanoacrylate-based ultraviolet absorbents, and hindered amine-based ultraviolet stabilizers. Specific examples include salicylic acid-based agents such as p-t-butylphenyl salicylate and p-octylphenyl salicylate; benzophenone-based agents such as 2,4-dihydroxybenzophenone, 2-hydroxy-4-methoxybenzophenone, 2-hydroxy-4-methoxy-5-sulfobenzophenone, 2,2',4,4'-tetrahydroxybenzophenone, and bis(2-methoxy-4-hydroxy-5-benzoylphenyl)methane; benzotriazole-based agents such as 2-(2'-hydroxy-5'-methylphenyl)benzotriazole, 2-(2'-hydroxy-5'-methylphenyl)benzotriazole, and 2,2'-methylenebis[4-(1,1,3,3-tetramethylbutyl)-6-(2H-benzotraizol-2-yl)phenol]; cyanoacrylate-based agents such as ethyl-2-cyano-3,3'-diphenyl acrylate); triazine-based agents such as 2-(4,6-diphenyl-1,3,5-triazin-2-yl)-5-[(hexyl)oxy]-phenol; hindered amine-based agents such as bis(2,2,6,6-tetramethyl-4-piperidyl) sebacate, dimethyl succinate, 1-(2-hydroxyethyl)-4-hydroxy-2,2,6,6,-tetramethylpiperidine polycondensate; and nickel bis(octylphenyl) sulfide, and 2,4-di-t-butylphenyl-3',5'-di-t-butyl-4'-hydroxybenzoate. Among these ultraviolet absorbents, from the viewpoints of having high resistance to repeated ultraviolet absorption, triazine-based ultraviolet absorbents are more preferable. These ultraviolet absorbents may be added into the film in the form of an ultraviolet absorbent alone, or may be introduced in the form of a monomer having an ultraviolet absorbent capability copolymerized into an organic conductive material or a non-water-soluble resin.

The content of the light stabilizer in the polyester film is preferably from 0.1% by mass to 10% by mass, more preferably from 0.3% by mass to 7% by mass, and even more preferably from 0.7% by mass to 4% by mass, based on the total mass of the polyester film. Thereby, a decrease in the molecular weight of polyester due to photodegradation over a long time period can be suppressed, and as a result, a decrease in the adhesive power caused by cohesion failure in the film can be suppressed.

Furthermore, the polyester resin composition of the invention can contain, other than the light stabilizers, for example, a lubricant (fine particles), an ultraviolet absorbent, a colorant, a nucleating agent (a crystallizing agent), and a flame retardant as additives.

- Drawing step -

The polyester resin composition of the invention can be formed into a polyester film by biaxially drawing an extrusion film (undrawn film) produced by extrusion after the steps described above.

Specifically, it is preferable that the undrawn polyester film is directed to a group of rolls heated to a temperature of from 70°C to 140°C, and is drawn in the longitudinal direction (lengthwise direction, that is, the direction of movement of the film) at a drawing ratio of from 3 times to 5 times, and is cooled by a group of rolls at a temperature of from 20°C to 50°C. Subsequently, while the two ends of the film are clamped with clips, the film is directed to a tenter, and in an atmosphere heated to a temperature of from 80°C to 150°C, the film is drawn in a direction perpendicular to the longitudinal direction (width direction) at a drawing ratio of from 3 times to 5 times.

The draw ratio is preferably set at from 3 times to 5 times in the longitudinal direction and the width direction, respectively. Furthermore, it is preferable to set the area scale factor (longitudinal drawing ratio × horizontal drawing ratio) at from 9 times to 15 times. When the area scale factor is 9 times or greater, the reflection ratio, concealability and film strength of the biaxially drawn laminate film thus obtained are satisfactory, and when the area scale factor is 15 times or less, destruction during drawing can be avoided.

The method of biaxially drawing the film may be any of a successive biaxial drawing method of separately carrying out drawing in the longitudinal direction and drawing in the width direction as described above, and a simultaneous biaxial drawing method of carrying out drawing in the longitudinal direction and drawing in the width direction at the same time.

As described above, the polyester resin that is obtained by using an aromatic dicarboxylic acid component and a diol component, is preferably polyethylene terephthalate (PET) or polyethylene-2,6-naphthalate (PEN), and more preferably PET.

(Solar cell power generation module)

For example, when performing solid state polymerization of pellets obtained by melt polymerization and molding it into a film form through extrusion molding, the polyester resin composition of the invention is suitable as a film material for a protective sheet (so-called back sheet) that is disposed on a side opposite to a side of sunlight entrance in a solar cell power generation module, or for a barrier sheet.

The application for a solar cell power generation module may employ an embodiment in which power generation devices (solar cell devices) connected with lead wires (not depicted) that take out electricity, are sealed with a sealing agent such as an ethylene-vinyl acetate copolymer-based (EVA-based) resin, this assembly is placed between a transparent substrate such as glass and the film (back sheet) formed from the polyester resin composition of the invention, and the respective components are pasted onto each other. As the solar cell device, various known solar cell devices such as silicon-based devices such as single crystal silicon, polycrystalline silicon and amorphous silicon; and Group III-V or Group II-VI compound semiconductor-based devices such as copper-indium-gallium-selenium, copper-indium-selenium, cadmium-tellurium and gallium-arsenic, can be applied.

According to an aspect of the invention, there are provided the following embodiments <1> to <7>.

<1> A polymerization method for a polyester resin, the method comprising:

an esterification reaction step which includes at least polymerizing an aromatic dicarboxylic acid and an aliphatic diol in the presence of a catalyst containing a titanium compound including an organic chelated titanium complex having an organic acid as a ligand, and adding the organic chelated titanium complex, a magnesium compound, and a pentavalent phosphoric acid ester which does not have an aromatic ring as a substituent, in this order; and a condensation polymerization step of subjecting an esterification reaction product produced by the esterification reaction step to a condensation polymerization reaction.

<2> The polymerization method for a polyester resin according to <1>, wherein the organic chelated titanium complex includes an organic chelated titanium complex having citric acid or a citric acid salt as a ligand, and the pentavalent phosphoric acid ester includes a phosphoric acid ester having a lower alkyl group having 2 or fewer carbon atoms as a substituent.

<3> The polymerization method for a polyester resin according to <1> or <2>, wherein the esterification reaction step includes adding the organic chelated titanium complex, the magnesium compound and the phosphoric acid ester such that a value Z calculated from the following formula (i) satisfies the following formula (ii):

$$\text{(i) } Z = 5 \times (\text{P content [ppm]/atomic weight of P}) - 2 \times (\text{Mg content [ppm]/atomic weight of Mg}) - 4 \times (\text{Ti content [ppm]/atomic weight of Ti})$$

$$\text{(ii) } 0 \leq Z \leq +5.0.$$

<4> The polymerization method for a polyester resin according to <3>, wherein the value Z further satisfies the following formula (ii-a):

<5> The polymerization method for a polyester resin according to any one of <1> to <4>, wherein in the esterification reaction step, the addition amount of each of the organic chelated titanium complex, the magnesium compound, and the pentavalent phosphoric acid ester, added in this order, is at least 70% by mass of the total addition amount thereof.

<6> The polymerization method for a polyester resin according to any one of <1> to <5>, wherein in the esterification reaction step, the phosphoric acid ester is added before initiation of depressurization for carrying out the condensation polymerization reaction.

<7> A polyester resin composition comprising titanium atoms (Ti), magnesium atoms (Mg) and phosphorus atoms (P), wherein a value Z calculated from the following formula (i) satisfies the following formula (ii):

$$\text{(i) } Z = 5 \times (\text{P content [ppm]/atomic weight of P}) - 2 \times (\text{Mg content [ppm]/atomic weight of Mg}) - 4 \times (\text{Ti content [ppm]/atomic weight of Ti})$$

$$\text{(ii) } 0 \leq Z \leq +5.0.$$

wherein the content of magnesium atoms (Mg) is 50 ppm or greater.

<8> The polyester resin composition according to <7>, wherein the value Z further satisfies the following formula (ii-a):

$$(\text{ii-a}) \ +1.5 \leq Z \leq +5.0.$$

<9> The polyester resin composition according to <7>, which further satisfies the following formula (iii) and formula (iv):

(iii) b value when fabricated into pellets after condensation polymerization $\leq 4.0$

(iv) rate of color tone change when the pellets are retained in a molten state at 300°C [$\Delta$h/minute] $\leq 0.15$.

Use of the polyester resin composition according to <7> in a polyester film.

According to the invention, there can be provided a method for producing a polyester resin capable of yielding a polyester resin which has appropriately satisfactory polymerization reactivity and electrostatic applicability, does not easily cause yellowing even under high temperature during the polymerization reaction and during the subsequent film forming (during melting), and has excellent heat resistance.

According to the invention, there can be provided a polyester resin composition and a polyester film, which have appropriately satisfactory polymerization reactivity and electrostatic applicability as well as a color tone with less yellow tinge, and do not easily cause yellowing even under high temperature during film forming (during melting) after the polymerization reaction, and have excellent heat resistance.

EXAMPLES

Hereinafter, the invention will be described more specifically based on Examples.

(Example 1)

- Production of PET1 -

As will be shown below, a polyester resin was obtained using a continuous type polymerization apparatus using a direct esterification method of directly reacting terephthalic acid and ethlyene glycol, distilling off water to perform esterification, and then performing condensation polymerization under reduced pressure.

(1) Esterification reaction

In a first Esterification reaction tank, 4.7 tons of high purity terephthalic acid and 1.8 tons of ethylene glycol were mixed over 90 minutes to form a slurry, and the slurry was continuously supplied to the first esterification reaction tank at a flow rate of 3800 kg/h. Furthermore, an ethylene glycol solution of a citric acid chelated titanium complex (VERTEC AC-420, trade name, manufactured by Johnson Matthey Plc.) having Ti metal coordinated with citric acid was continuously supplied, and a reaction was carried out at a temperature inside the reaction tank of 251 °C and for an average retention time of about 4.3 hours with stirring. At this time, the citric acid chelated titanium complex was continuously added such that the addition amount of Ti element was 9 ppm. At this time, the acid value of the oligomer thus obtained was 500 eq/ton.

This reaction product was transferred to a second esterification reaction tank, and with stirring, the reaction product was allowed to react at a temperature inside the reaction tank of 250°C for an average retention time of 1.2 hours. Thus, an oligomer having an acid value of 190 eq/ton was obtained. The inside of the second esterification reaction tank was divided into three zones, so that an ethylene glycol solution of magnesium acetate was continuously supplied at the second zone such that the addition amount of Mg element was 75 ppm, and subsequently an ethylene glycol solution of trimethyl phosphate was continuously supplied at the third zone such that the addition amount of p element was 65 ppm.

(2) Condensation polymerization reaction

The esterification reaction product obtained as described above was continuously supplied to a first condensation polymerization reaction tank, and with stirring, condensation polymerization was carried out at a reaction temperature of 270°C and a pressure inside the reaction tank of 20 torr ($2.67 \times 10^{-3}$ MPa) for an average retention time of about 1.8 hours.

Furthermore, the reaction product was transferred to a second condensation polymerization reaction tank, and in this reaction tank, a reaction (condensation polymerization) was carried out with stirring under the conditions of a temperature inside the reaction tank of 276°C and a pressure inside the reaction tank of 3.0 torr ($3.99 \times 10^{-4}$ MPa) for a retention time of about 1.2 hours.

Subsequently, the reaction product was further transferred to a third condensation polymerization reaction tank, and in this reaction tank, a reaction (condensation polymerization) was carried out under the conditions of a temperature inside the reaction tank of 278°C and a pressure inside the reaction tank of 1.0 torr ($1.33 \times 10^{-4}$ MPa) for a retention time of 1.5 hours. Thus, a reaction product (polyethylene terephthalate (PET)) was obtained.

Subsequently, the reaction product thus obtained was ejected in cold water into a strand form, and the strands were immediately cut to produce pellets of a polyester resin <cross-section: major axis about 4 mm, minor axis about 2 mn, length: about 3 mm>. Furthermore, these pellets were dried in a vacuum at 180°C. and then the pellets were fed into a raw material hopper of a single-screw or twin-screw extruder equipped with a screw inside the cylinder, and extruded. Thus, the pellets could be molded into a film.

(3) Contents of elements and value Z

The polyester resin thus obtained was analyzed using a high resolution type high frequency inductively coupled plasma mass spectrometer (HR-ICP-MS; trade name, AttoM, manufactured by SII Nanotechnology, Inc.), and it was found that Ti = 9 ppm, Mg = 75 ppm, and P = 60 ppm. It is speculated that P content in the polyester was slightly reduced as compared with the initial addition amount, but this portion was volatilized during the condensation polymerization process. Further, the Z value was calculated from the following formula (i) using the above contents of elements, and it was found that Z = +2.8.

$$(i) \quad Z = 5 \times (P \text{ content } [ppm]/\text{atomic weight of P}) - 2 \times (Mg \text{ content } [ppm]/\text{atomic weight of Mg}) - 4 \times (Ti \text{ content } [ppm]/\text{atomic weight of Ti})$$

- Production of PET2 and PET3 -

A polyethylene terephthalate (PET) was produced in the same manner as in the production of PET1, except that the amount of the ethylene glycol solution of trimethyl phosphate added in the esterification reaction during the production of PET1, was changed, and thus pellets were produced.

- Production of PET4 to PET9 -

A polyethylene terephthalate (PET) was produced in the same manner as in the production of PET1, except that the type of the titanium compound or phosphorus compound used in the production of PET1 was changed as indicated in the following Table 1, and thus pellets were produced.

- Production of PET10 -

A polyethylene terephthalate (PET) was produced in the same manner as in the production of PET1, except that the titanium compound described in Example 1 of JP-A No. 2004-307597 was prepared and used, and the addition amount of the ethylene glycol solution of trimethyl phosphate and the addition amount of the titanium compound in the esterification reaction were changed, and thus pellets were produced.

- Production of PET 11

A polyethylene terephthalate (PET) was produced in the same manner as in the production of PET1, except that the titanium compound described in Example 7 of JP-A No. 2004-224858 was prepared and used, and the addition amount of the ethylene glycol solution of trimethyl phosphate and the addition amount of the titanium compound in the esterification reaction were changed, and thus pellets were produced.

- Production of PET12 to PET14 -

A polyethylene terephthalate (PET) for Comparison was produced in the same manner as in the production of PET1, except that the order of addition of the citric acid chelated titanium complex (Ti compound), magnesium acetate (Mg compound) and trimethyl phosphate (phosphorus compound) used in the production of PET1 was changed as indicated in the following Table 1, and thus pellets were produced.

- Production of PET15 -

A polyethylene terephthalate (PET) for Comparison was produced in the same manner as in the production of PET1, except that the addition of the citric acid chelated titanium complex (Ti compound) used in the production of PET1 was carried out after the esterification reaction but before the condensation polymerization reaction was initiated, and thus pellets were produced.

- Production of PET16 to PET17 -

A polyethylene terephthalate (PET) for Comparison was produced in the same manner as in the production of PET1, except that the citric acid chelated titanium complex (Ti compound) used in the production of PET1 was replaced by antimony oxide or germanium oxide, and thus pellets were produced.

- Production of PET18 -

A polyethylene terephthalate (PET) for Comparison was produced in the same manner as in the production of PET1, except that the trimethyl phosphate used in the production of PET1 was replaced by trivalent triphenyl phosphite, and thus pellets were produced.

- Measurement and evaluation -

The respective PETs (polyethylene terephthalate resin composition) and pellets thereof obtained as described above were subjected to the following measurement and evaluation. The results of the measurement and evaluation are shown in the following Table 1.

(1) Elemental content and value Z

Titanium element (Ti), magnesium element (Mg), and phosphorus element (P), and antimony element (Sb) or germanium element (Ge) in the PET were quantitatively analyzed by using a high resolution type high frequency inductively-coupled plasma mass spectrometer (HR-ICP-MS; trade name, AttoM, manufactured by SII Nanotechnology, Inc.), and the contents [ppm] of the elements were calculated from the results obtained. The value Z was calculated from the following formula (i) using the values obtained above.

$$Z = 5 \times (\text{P content [ppm]/atomic weight of P}) - 2 \times (\text{Mg content [ppm]/atomic weight of Mg}) - 4 \times (\text{Ti content [ppm]/atomic weight of Ti}) \qquad (i)$$

Z=5x(P content [ppm]/atomic weight of P)-2×(Mg content [ppm]/atomic weight of Mg)-4×(Ti content [ppm]/atomic weight of Ti) (i)

(2) IV

PET pellets obtained after the condensation polymerization were dissolved in a mixed solution of 1,1,2,2-tetrachlorethane/phenol (= 2/3 [mass ratio]), and the relative viscosity $\eta_0$ at 25°C was measured using an Ubbelohde type viscometer. The specific viscosity ($\eta_{sp}$) determined from this relative viscosity and the concentration c were used to determine $\eta_{sp}$/c, and the intrinsic viscosity (IV) was calculated by a three-point method.

(3) b value of pellets

The color tone of the pellets thus obtained was measured using an SM color meter (manufactured by Suga Test Instruments Co., Ltd.), and thereby the b value was determined. The b value was used as an index for evaluating the color tone.

(4) Amount of terminal COOH groups

0.1 g of PET pellets were dissolved in 10 ml of benzyl alcohol, and then chloroform was added thereto to prepare a mixed solution. Phenol red indicator was added dropwise thereto, and this solution was titrated with a standard solution (0.01 N KOH-benzyl alcohol mixed solution). The amount of terminal carboxyl groups was calculated from the amount added dropwise.

(5)LogR

The volume intrinsic resistance value R ($\Omega \cdot$m) of the PET thus obtained was measured by the following measurement method, and the common logarithmic value of the measurement value obtained was defined as LogR.

<Measurement of volume intrinsic resistance value R>

The PET pellets obtained after condensation polymerization were dried in a vacuum dryer and were crystallized. Then, 15 g of the pellets were weighed, placed in a test tube, and melted in an oil bath at 290°C. An electrode for measurement was inserted therein, and the volume intrinsic resistance value was read using a digital multimeter (manufactured by Iwatsu Test Instruments Corp.).

(6) Rate of color tone change (heat resistance)

The PET pellets obtained after condensation polymerization were fed into a raw material hopper of an injection molding machine (EC100NII, trade name, manufactured by Toshiba Machine Co., Ltd.), and while the pellets were retained in a molten state inside the cylinder (300°C) and the retention time was change, the pellets were molded into a plate shape. For the molded plate, the b value in transmission was measured using an SM color meter (manufactured by Suga Test Instruments Co., Ltd.). The rate of color tone change [$\Delta$b/minute] was calculated from the rate of change over time of the b value of the plate, and was used as an index for heat resistance.

(7) Polymerization reactivity

Regarding each of PET1 to PET18, the melt viscosity (IV) of a polymer (pellets) obtained using the same polymerization condition as that of PET1 of Example 1 was measured, and the obtained value was classified in the following five grades (higher IV represents higher reactivity). In view of the suitability for the film forming process, grade 3 or higher is a practically acceptable level.

    5: 0.65 or more
    4: 0.63 or more but less than 0.65
    3: 0.61 or more but less than 0.63
    2: 0.59 or more but less than 0.61
    1: less than 0.59

(8) Foreign matter during polymerization

The PET pellets obtained after condensation polymerization were dried in a vacuum dryer and were crystallized. Then, one grain was mounted on a cover glass and was melted on a hot plate heated to 290°C. Subsequently, an observation was made for any foreign matter in the resin using an optical microscope, and evaluation was made according to the following evaluation criteria.

<Evaluation criteria>

    A: Generation of any foreign matter was not observed.
    B: Generation of foreign matter was slightly observed, but the amount was at a practically acceptable level.
    C: Generation of foreign matter was significant.

(Example 2)

- Production of PET19 to PET30 -

A polyethylene terephthalate (PET) was produced, and in this case, the respective addition amounts of the citric acid chelated titanium complex (Ti compound), magnesium acetate (Mg compound) and trimethyl phosphate (phosphorus compound) used in the production of PET1 were changed such that the contents of the elements were as indicated in the following Table 2, and thus pellets were produced.

In the production of each of PET19 to PET30, a polyester was obtained under the following conditions using a batch type polymerization apparatus.

- 1. Esterification reaction -

In a 50 m$^3$ esterification reaction tank, 17.3 kg of a high-purity terephthalic acid and 8.4 kg of ethylene glycol were mixed, an esterification reaction was carried out in accordance with an ordinary method, and the reaction was finalized when the inner temperature of the reaction liquid reached 250°C. During the process until the esterification reaction was finalized, an ethylene glycol solution of a citric acid chelated titanium complex (VERTEC AC-420, trade name, manufactured by Johnson Matthey Plc.), an ethylene glycol solution of magnesium acetate, and an ethylene glycol solution of trimethyl phosphate were added in this order, the esterification reaction was finalized, and an esterification reaction product was obtained.

- 2. Condensation polymerization reaction

The above obtained esterification reaction product was transferred to a condensation polymerization reaction tank, and a condensation polymerization reaction was carried out by stirring at a reaction temperature of 280°C and a pressure inside the reaction tank of 0.1 torr (1.33×10$^{-5}$ MPa). The reaction was finalized when a predetermined viscosity (IV=0.65) was reached.

- 3. Evaluation of polymerization reactivity -

The time required for reaching the predetermined viscosity (IV=0.65) was used as an index for evaluating the polymerization reactivity, and classified in the following five grades. In view of the productivity and the suitability for the film forming process in the case of a continuous polymerization process, grade 3 or higher is a practically acceptable level. 5: 120 min or less

    4: from more than 120 min to 160 min
    3: from more than 160 min to 200 min
    2 more than 200 min
    1: unpolymerizable

- Measurement and evaluation

The same measurement and evaluation as in Example 1 were carried out for the PET (polyethylene terephthalate resin composition) 19 to 30 obtained as described above and pellets thereof. The results of the measurement and evaluation are presented in the following Table 2.

Table 1

| | Titanium compound | | Magnesium compound | | Phosphorus compound | | .Order of addition | Elemental content in PET [ppm] | | | Value Z in formula (i) | Polymeri zation reactivity | IV [dl /g] | b value of pellets | LogR | COOH group [eq /ton] | Rate of color tone change \|Δb /min] (*3) | Presence of foreign matter | Remarks |
|---|---|---|---|---|---|---|---|---|---|---|---|---|---|---|---|---|---|---|---|
| | Type | Position of addition | Type | Position of addition | Type | Position of addition | | P | Mg | Catalyst metal | | | | | | | | | |
| PET 1 | Citric acid chelated titanium complex | First esterifi cation tank | Mag nesium acetate | Second esterifi cation tank | Trimethyl phosphate | Second esterifi cation tank | Ti→Mg →P | 60 | 75 | 9 | 2.8 | 4 | 0.65 | 2.5 | 6.6 | 22 | 0.10 | A | Invention |
| PET 2 | Citric acid chelated titanium complex | | | | Trimethyl phosphate | | Ti→Mg →P | 55 | 75 | 9 | 2.1 | 5 | 0.65 | 4.0 | 6.5 | 24 | 0.13 | A | Invention |
| PET 3 | Citric acid chelated titanium complex | | | | Trimethyl phosphate | | Ti→Mg →P | 45 | 75 | 9 | 0.4 | 5 | 0.65 | 4.0 | 6.5 | 24 | 0.14 | A | Invention |
| PET 4 | Citric acid chelated titanium complex | | | | Triethyl phosphate | | Ti→Mg →P | 60 | 75 | 9 | 2.8 | 4 | 0.65 | 3.0 | 6.6 | 23 | 0.13 | A | Invention |
| PET 5 | | | | | Tributyl phosphate | | | | | | 2.8 | 5 | 0.65 | 4.0 | 6.5 | 25 | 0.15 | A | Invention |
| PET 6 | | | | | Triphenyl phosphate | | | | | | 2.8 | 5 | 0.65 | 6.0 | 6.4 | 30 | 0.20 | A | Comparison |
| PET 7 | | | | | Irganox 1222 | | | | | | 2.8 | 5 | 0.65 | 5.5 | 6.4 | 28 | 0.19 | A | Comparison |
| PET 8 | Lactic acid chelated complex | | | | Trimethyl phosphate | | Ti→Mg →P | 60 | 75 | 9 | 2.8 | 3 | 0.65 | 3.5 | 6.5 | 25 | 0.15 | A | Comparison |
| PET 9 | Tetra isopropyl titanate | | | | | | | | | | 2.8 | 3 | 0.65 | 5.0 | 6.6 | 30 | 0.18 | B | Comparison |
| PET 10 | Ti compound (*1) | | | | Trimethyl phosphate | | Ti→Mg →P | 64 | 75 | 19 | 2.6 | 3 | 0.65 | 4.5 | 6.6 | 35 | 0.25 | B | Comparison |
| PET 11 | Ti compound (*2) | | | | Trimethyl phosphate | | Ti→Mg →P | 64 | 75 | 32 | 1.5 | 3 | 0.65 | 3.5 | 6.5 | 30 | 0.20 | B | Comparison |

| | | | | | | | | | | | | | | | | | | |
|---|---|---|---|---|---|---|---|---|---|---|---|---|---|---|---|---|---|---|
| PET 12 | Citric acid chelated titanium complex | First esterification tank | Magnesium acetate | Second esterification tank | Trimethyl phosphate | Second esterification tank | P→Mg →Ti | 60 | 75 | 9 | 2.8 | 5 | 0.65 | 6.0 | 7.1 | 30 | 0.30 | B | Comparison |
| PET 13 | Citric acid chelated titanium complex | | | | Trimethyl phosphate | | P→Ti →Mg | 60 | 75 | 9 | 2.8 | 1 | 0.65 | – | – | – | – | – | Comparison |
| PET 14 | Citric acid chelated titanium complex | Second esterification tank | Magnesium acetate | First esterification tank | Trimethyl phosphate | Second esterification tank | Mg→Ti →P | 60 | 75 | 9 | 2.8 | 3 | 0.65 | 5.0 | 6.8 | 30 | 0.17 | A | Comparison |
| PET 15 | Citric acid chelated titanium complex | After completion of esterification | Magnesium acetate | After completion of esterification | Trimethyl phosphate | After completion of esterification | Ti→Mg →P | 60 | 75 | 9 | 2.8 | 3 | 0.65 | 4.5 | 6.6 | 28 | 0.16 | A | Comparison |
| PET 16 | Antimony oxide | First esterification tank | Magnesium acetate | Second esterification tank | Trimethyl phosphate | Second esterification tank | Sb →Mg →P | 60 | 75 | 200 | – | 5 | 0.65 | 6.5 | 6.5 | 50 | 0.30 | C | Comparison |
| PET 17 | Germanium oxide | | | | Trimethyl phosphate | | Ge →Mg →P | 60 | 75 | 50 | – | 3 | 0.65 | 2.5 | 7.0 | 35 | 0.10 | A | Comparison |
| PET 18 | Citric acid chelated titanium complex | | | | Triphenyl phosphite | | Ti→Mg →P | 60 | 75 | 9 | 2.8 | 5 | 0.65 | 8.0 | 6.5 | 30 | 0.30 | A | Comparison |

*1: Ti compound and addition amount thereof (ppm) described in Example 1 of JP-A No. 2004-307597 was used.

*2: Ti compound and addition amount thereof (ppm) described in Example 7 of JP-A No. 2004-224858 was used.

*3: Increase rate of b value during the retention in a molten state inside the cylinder (300°C) of the injection molding machine.

EP 2 345 684 B1

As shown in the Table 1, in the present invention, since a magnesium compound and a pentavalent phosphorus compound that does not have an aromatic ring were added in this order in the presence of an organic chelated titanium complex as a titanium compound, there was obtained a polyester resin which has a reactivity equal to or greater than the reactivity in the case of using conventional Sb catalysts, maintains high electrostatic applicability, and has less coloration and excellent heat resistance, as compared with PETs for comparison which were produced without employing this order of addition, or without using the specific titanium compound or phosphorus compound.
In addition, the composition using a trivalent phosphoric acid ester was inferior to the composition using a pentavalent phosphoric acid ester, in terms of color tinge and heat resistance.

Table 2

| | Titanium compound | Magnesium compound | Phosphorus compound | Order of addition | Elemental content in PET [ppm] | | | Value Z in formula (i) | Polymenzation reactivity | IV [dl/g] | b value of pellets | LogR | COOH group [eq/ton] | Rate of color tone change [Δb/min] (*1) | Remarks |
|---|---|---|---|---|---|---|---|---|---|---|---|---|---|---|---|
| | | | | | P | Mg | Ti | | | | | | | | |
| PET 19 | Citric acid chelated titanium complex | Magnesium acetate | Trimethyl phosphate | Ti→Mg →P | 75 | 75 | 9 | 52 | 2 | 065 | 2.4 | 6.9 | 25 | 009 | Comparison |
| PET 20 | Citric acid chelated titanium complex | Magnesium acetate | Trimethyl phosphate | Ti→Mg →P | 71 | 75 | 9 | 4.6 | 3 | 0.65 | 20 | 6.8 | 21 | 0.09 | Invention |
| PET 21 | Citric acid chelated Titanium complex | Magnesium acetate | Trimethyl phosphate | Ti→Mg →P | 67 | 75 | 9 | 3.9 | 4 | 0.65 | 2.2 | 67 | 21 | 0.10 | Invention |
| PET 22 | Citric acid chelated titanium complex | Magnesium acetate | Trimethyl phosphate | Ti→Mg →P | 60 | 75 | 9 | 2.8 | 4 | 0.65 | 2.5 | 6.6 | 22 | 0.10 | Invention |
| PET 23 | Citric acid chelated titanium Complex | Magnesium acetate | Trimethyl phosphate | Ti→Mg →P | 55 | 75 | 9 | 2.0 | 5 | 065 | 3.8 | 6.5 | 24 | 0.13 | Invention |
| PET 24 | Citric acid chelated titanium complex | Magnesium acetate | Trimethyl phosphate | Ti→Mg →P | 50 | 75 | 9 | 1.2 | 5 | 0.65 | 5.0 | 6.4 | 26 | 0.16 | Invention |
| PET 25 | Citric acid cheated titanium complex | Magnesium acetate | Trimethyl phosphate | Ti→Mg →P | 60 | 65 | 9 | 3.6 | 4 | 0.65 | 2.3 | 6.7 | 21 | 0.10 | Invention |

(continued)

| | Titanium compound | Magnesium compound | Phosphorus compound | Order of addition | Elemental content in PET [ppm] | | | Value Z in formula (i) | Polymenzation reactivity | IV [dl/g] | b value of pellets | LogR | COOH group [eq/ton] | Rate of color tone change [Δb/min] (*1) | Remarks |
|---|---|---|---|---|---|---|---|---|---|---|---|---|---|---|---|
| | | | | | P | Mg | Ti | | | | | | | | |
| PET 26 | Citric acid chelated titanium complex | Magnesium acetate | Trimethyl phosphate | Ti→Mg →P | 60 | 60 | 9 | 4.4 | 3 | 0.65 | 20 | 6.9 | 21 | 009 | Invention |
| PET 27 | Citric acid chelated titanium complex | Magnesium acetate | Trimethyl phosphate | Ti→Mg →P | 60 | 45 | 9 | 5.3 | 2 | 0.65 | 2.5 | 7.0 | 26 | 009 | Comparison |
| PET 28 | Citric acid chelated titanium complex | Magnesium acetate | Trimethyl phosphate | Ti→Mg →P | 60 | 95 | 9 | 1.1 | 5 | 0.65 | 5.2 | 6.3 | 28 | 0.18 | Invention |
| PET 29 | Citnc acid chelated titanium complex | Magnesium acetate | Trimethyl phosphate | Ti→Mg →P | 15 | 30 | 7 | -0.6 | 5 | 0.65 | 5.5 | 6.5 | 28 | 025 | Comparison |
| PET 30 | Citric acid chelated titanium complex | Magnesium acetate | Trimethyl phosphate | Ti→Mg →P | 80 | 75 | 9 | 6.0 | 2 | 0.65 | 2.4 | 6.9 | 26 | 009 | Comparison |

*1: Increase rate of b value during the retention in a molten state inside the cylinder (300°C) of the injection molding machine

As shown in the Table 2, in the present invention in which the value Z representing the balance between the Ti catalyst and the additives (Mg and P) was set in a predetermined range, there were obtained polyester resins which maintain a satisfactory reaction activity of the titanium catalyst and have less coloration and excellent heat resistance as compared with the PETs for comparison.

**Claims**

1. A polymerization method for a polyester resin, the method comprising:

   an esterification reaction step which includes at least polymerizing an aromatic dicarboxylic acid and an aliphatic diol in the presence of a catalyst containing a titanium compound including an organic chelated titanium complex having an organic acid as a ligand, and adding the organic chelated titanium complex, a magnesium compound, and a pentavalent phosphoric acid ester which does not have an aromatic ring as a substituent, in this order; and a condensation polymerization step of subjecting an esterification reaction product produced by the esterification reaction step to a condensation polymerization reaction.

2. The polymerization method for a polyester resin according to claim 1, wherein the organic chelated titanium complex includes an organic chelated titanium complex having citric acid or a citric acid salt as a ligand, and the pentavalent phosphoric acid ester includes a phosphoric acid ester having a lower alkyl group having 2 or fewer carbon atoms as a substituent.

3. The polymerization method for a polyester resin according to claim 1, wherein the esterification reaction step includes adding the organic chelated titanium complex, the magnesium compound and the phosphoric acid ester such that a value Z calculated from the following formula (i) satisfies the following formula (ii):

$$\text{(i) } Z = 5 \times (\text{P content [ppm]/atomic weight of P}) - 2 \times (\text{Mg content [ppm]/atomic weight of Mg}) - 4 \times (\text{Ti content [ppm]/atomic weight of Ti})$$

$$\text{(ii) } 0 \leq Z \leq +5.0.$$

4. The polymerization method for a polyester resin according to claim 3, wherein the value Z further satisfies the following formula (ii-a):

$$\text{(ii-a) } +1.5 \leq Z \leq +5.0.$$

5. The polymerization method for a polyester resin according to claim 1, wherein in the esterification reaction step, the addition amount of each of the organic chelated titanium complex, the magnesium compound, and the pentavalent phosphoric acid ester, added in this order, is at least 70% by mass of the total addition amount thereof.

6. The polymerization method for a polyester resin according to claim 1, wherein in the esterification reaction step, the phosphoric acid ester is added before initiation of depressurization for carrying out the condensation polymerization reaction.

7. A polyester resin composition comprising titanium atoms (Ti), magnesium atoms (Mg) and phosphorus atoms (P), wherein a value Z calculated from the following Formula (i) satisfies the following Formula (ii):

$$\text{(i) } Z = 5 \times (\text{P content [ppm]/atomic weight of P}) - 2 \times (\text{Mg content [ppm]/atomic weight of Mg}) - 4 \times (\text{Ti content [ppm]/atomic weight of Ti})$$

$$\text{(ii) } 0 \leq Z \leq +5.0$$

23

wherein the content of magnesium atoms (Mg) is 50 ppm or greater.

8. The polyester resin composition according to Claim 7, wherein the value Z further satisfies the following Formula (ii-a):

$$(ii\text{-}a) +1.5 \leq Z \leq +5.0.$$

9. The polyester resin composition according to Claim 7, which further satisfies the following Formula (iii) and Formula (iv):

    (iii) b value when fabricated into pellets after condensation polymerization ≤ 4.0
    (iv) rate of color tone change when the pellets are retained in a molten state at 300°C [Δb/minute] ≤ 0.15.

10. Use of the polyester resin composition according to Claim 7 in a polyester film.


**Patentansprüche**

1. Polymerisationsverfahren für ein Polyesterharz, wobei das Verfahren umfasst:

    einen Veresterungsreaktionsschritt, der mindestens die Polymerisation einer aromatischen Dicarbonsäure und eines aliphatischen Diols in Gegenwart eines Katalysators, der eine Titanverbindung enthält, welche einen organischen chelatisierten Titankomplex mit einer organischen Säure als Ligand einschließt, und die Zugabe des organischen chelatisierten Titankomplexes, einer Magnesiumverbindung und eines fünfwertigen Phosphorsäureesters, der keinen aromatischen Ring als Substituenten besitzt, in dieser Reihenfolge einschließt; und einen Kondensationspolymerisationsschritt, in dem das Veresterungsreaktionsprodukt, das durch den Veresterungsreaktionsschritt hergestellt wird, einer Kondensationspolymerisationsreaktion unterzogen wird.

2. Polymerisationsverfahren für ein Polyesterharz gemäß Anspruch 1, wobei der organische chelatisierte Titankomplex einen organischen chelatisierten Titankomplex mit Zitronensäure oder einem Zitronensäuresalz als Liganden einschließt und der fünfwertige Phosphorsäureester einen Phosphorsäureester mit einer niederen Alkylgruppe mit zwei oder weniger Kohlenstoffatomen als Substituenten einschließt.

3. Polymerisationsverfahren für ein Polyesterharz gemäß Anspruch 1, wobei der Veresterungsreaktionsschritt die Zugabe des organischen chelatisierten Titankomplexes, der Magnesiumverbindung und des Phopshorsäureesters so einschließt, dass der von der folgenden Formel (i) berechnete Wert Z die folgende Formel (ii) erfüllt:

```
(i)    Z = 5 × (P-Gehalt[ppm]/Atomgewicht von P) - 2 ×
       (Mg-Gehalt[ppm]/Atomgewicht von Mg) - 4 × (Ti-
       Gehalt[ppm]/Atomgewicht von Ti)
```

```
(ii)   0 ≤ Z ≤ +5,0.
```

4. Polymerisationsverfahren für ein Polyesterharz gemäß Anspruch 3, wobei der Wert Z weiterhin die folgende Formel (ii-a) erfüllt:

```
(ii-a)    +1,5 ≤ Z ≤ +5,0.
```

5. Polymerisationsverfahren für ein Polyesterharz gemäß Anspruch 1, wobei in dem Veresterungsreaktionsschritt die Zugabemenge von jeweils des organischen chelatisierten Titankomplexes, der Magnesiumverbindung und des fünfwertigen Phosphorsäureesters, die in dieser Reihenfolge zugegeben werden, mindestens 70 Massen% der gesamten Zugabemenge davon beträgt.

**6.** Polymerisationsverfahren für ein Polyesterharz gemäß Anspruch 1, wobei in dem Veresterungsreaktionsschritt der Phosphorsäureester vor Beginn der Druckverringerung zur Durchführung der Kondensationspolymerisationsreaktion zugegeben wird.

**7.** Polyesterharzzusammensetzung, die Titanatome (Ti), Magnesiumatome (Mg) und Phosphoratome (P) umfasst, wobei der von der folgenden Formel (i) berechnete Wert Z die folgende Formel (ii) erfüllt:

(i)     Z = 5 × (P-Gehalt[ppm]/Atomgewicht von P) -2 × (Mg-Gehalt[ppm]/Atomgewicht von Mg) - 4 × (Ti-Gehalt[ppm]/Atomgewicht von Ti)

(ii)  0 ≤ Z ≤ +5,0.

wobei der Gehalt an Magnesiumatomen (Mg) 50 ppm oder größer ist.

**8.** Polyesterharzzusammensetzung gemäß Anspruch 7, wobei der Wert Z weiterhin die folgende Formel (ii-a) erfüllt:

(ii-a)     +1,5 ≤ Z ≤ +5,0.

**9.** Polyesterharzzusammensetzung gemäß Anspruch 7, die weiterhin die folgenden Formeln (iii) und Formel (iv) erfüllt:

(iii) b-Wert, wenn nach der Kondensationspolymerisation zu Pellets verarbeitet, ≤ 4,0
(iv) Rate der Farbtonänderung, wenn die Pellets in einem geschmolzenen Zustand bei 300°C gehalten werden, [Δb/Minute] ≤ 0,15.

**10.** Verwendung der Polyesterharzzusammensetzung gemäß Anspruch 7 in einer Polyesterschicht.

**Revendications**

**1.** Procédé de polymérisation pour une résine polyester, le procédé comprenant :

une étape de réaction d'estérification qui comprend au moins la polymérisation d'un acide dicarboxylique aromatique et d'un diol aliphatique en présence d'un catalyseur contenant un composé de titane comprenant un complexe de titane organique chélaté présentant un acide organique comme un ligand, et l'addition du complexe de titane chélaté organique, d'un composé de magnésium, et d'un ester d'acide phosphorique pentavalent qui ne présente pas un cycle aromatique comme un substituant, dans cet ordre ; et
une étape de condensation polymérisation consistant à soumettre un produit de réaction d'estérification produit par l'étape de réaction d'estérification à une réaction de condensation polymérisation.

**2.** Procédé de polymérisation pour une résine polyester selon la revendication 1, dans lequel le complexe de titane chélaté organique comprend un complexe de titane chélaté organique présentant de l'acide citrique ou un sel d'acide citrique comme un ligand, et l'ester d'acide phosphorique pentavalent comprend un ester d'acide phosphorique présentant un groupe alkyle inférieur ayant 2 atomes de carbone ou moins comme un substituant.

**3.** Procédé de polymérisation pour une résine polyester selon la revendication 1, dans lequel l'étape de réaction d'estérification comprend l'addition du complexe de titane chélaté organique, du composé de magnésium et de l'ester d'acide phosphorique de sorte qu'une valeur Z calculée à partir de la formule (i) suivante satisfait la formule (ii) suivante :

(i) Z=5x(teneur en P [ppm]/masse atomique de P)-2x(teneur en Mg [ppm]/masse atomique de Mg)-4x(teneur en Ti [ppm]/masse atomique de Ti)

(ii) $0 \leq Z \leq +5,0.$

4. Procédé de polymérisation pour une résine polyester selon la revendication 3, dans lequel la valeur Z satisfait de plus la formule (ii-a) suivante :

(ii-a)$+1,5 \leq Z \leq + 5,0.$

5. Procédé de polymérisation pour une résine polyester selon la revendication 1, dans lequel dans l'étape de réaction d'estérification, la quantité d'addition de chacun du complexe de titane chélaté organique, du composé de magnésium, et de l'ester d'acide phosphorique pentavalent, ajoutés dans cet ordre, est d'au moins 70 % en masse de la quantité d'addition totale de ceux-ci.

6. Procédé de polymérisation pour une résine polyester selon la revendication 1, dans lequel dans l'étape de réaction d'estérification, l'ester d'acide phosphorique est ajouté avant l'initiation de la dépressurisation pour réaliser la réaction de condensation polymérisation.

7. Composition de résine polyester comprenant des atomes de titane (Ti), des atomes de magnésium (Mg) et des atomes de phosphore (P), dans laquelle une valeur Z calculée à partir de la formule (i) suivante satisfait la formule (ii) suivante :

(i) Z=5x(teneur en P [ppm]/masse atomique de P)-2x(teneur en Mg [ppm]/masse atomique de Mg)-4x(teneur en Ti [ppm]/masse atomique de Ti)

(ii) $0 \leq Z \leq +5,0.$

dans laquelle la teneur en atomes de magnésium (Mg) est de 50 ppm ou supérieure.

8. Composition de résine polyester selon la revendication 7, dans laquelle la valeur Z satisfait de plus la formule (ii-a) suivante :

(ii-a)$+1,5 \leq Z \leq + 5,0.$

9. Composition de résine polyester selon la revendication 7, qui satisfait de plus la formule (iii) et la formule (iv) suivantes :

(iii) valeur b lorsqu'elle est fabriquée en boulettes après une condensation polymérisation $\leq 4,0$
(iv) vitesse de modification du ton de couleur lorsque les boulettes sont conservées dans un état fondu à 300°C [$\Delta$b/minute] $\leq 0,15.$

10. Utilisation de la composition de résine polyester selon la revendication 7 dans un film polyester.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004124067 A
- JP 2004197075 A
- JP 2006077148 A
- JP 2005089516 A
- JP 2004168888 A
- JP 7138354 A
- JP 2000239369 A
- JP 2004269772 A
- JP 2000169683 A
- JP 2004359770 A
- JP 2004224858 A
- JP 3717392 B
- JP 2005023312 A
- JP 2008201838 A
- JP 2008308641 A
- JP 8030119 B
- JP 2543624 B
- JP 3335683 B
- JP 3717380 B
- JP 3897756 B
- JP 3962226 B
- JP 3979866 B
- JP 3996871 B
- JP 4000867 B
- JP 4053837 B
- JP 4127119 B
- JP 4134710 B
- JP 4159154 B
- JP 4269704 B
- JP 4313538 B
- JP 2621563 B
- JP 3121876 B
- JP 3136774 B
- JP 3603585 B
- JP 3616522 B
- JP 3617340 B
- JP 3680523 B
- JP 4167159 B
- JP 2004307597 A